Europäisches Patentamt

European Patent Office

Office européen des brevets

(19)

(11) Numéro de publication: **0 394 125**
**A1**

(12) **DEMANDE DE BREVET EUROPEEN**

(21) Numéro de dépôt: 90401045.1

(22) Date de dépôt: 18.04.90

(51) Int. Cl.5: **F16J 15/40, D06F 58/24**

(30) Priorité: 21.04.89 FR 8905320

(43) Date de publication de la demande:
24.10.90 Bulletin 90/43

(84) Etats contractants désignés:
**AT DE DK ES FR GB IT NL SE**

(71) Demandeur: **CIAPEM**
**137, rue de Gerland**
**F-69007 - Lyon(FR)**

(72) Inventeur: **Burgel, Christian**
**Thomson-CSF, SCPI - Cédex 67**
**F-92045 Paris la défense(FR)**

(74) Mandataire: **Phan, Chi Quy et al**
**THOMSON-CSF SCPI**
**F-92045 PARIS LA DEFENSE CEDEX 67(FR)**

(54) **Appareil muni d'un dispositif de séparation étanche aux fluides gazeux.**

(57) Appareil tel qu'un séche-linge, un lavant-séchant ayant un dispositif de séparation (12) comportant des éléments à mouvement relatif (14, 15), monté dans sa cuve (2) et destiné à diviser d'une manière étanche aux fluides gazeux l'enceinte de celle-ci en deux espaces distincts (10, 11), caractérisé en ce que le dispositif de séparation (12) comprend au niveau de la jointure de ses éléments à mouvement relatif (14,15) un premier (14) de ces éléments pourvu le long du bord de son ouverture (17), d'une gouttière ou rainure circulaire (30) ouverte du côté du centre de cette ouverture et servant de réservoir à un liquide (31) formant un joint liquide annulaire (28, 28a) et un deuxième (15, 44) de ces éléments muni d'un bord saillant circulaire (23) inséré dans cette gouttière ou rainure circulaire du premier élément (30), libre de tout contact avec des parois de cette gouttière ou rainure et immergé sur tout son long dans le liquide (31) de ce joint liquide annulaire (28, 28a).

## APPAREIL MUNI D'UN DISPOSITIF DE SEPARATION ETANCHE AUX FLUIDES GAZEUX

La présente invention concerne un appareil tel qu'un sèche-linge, un lavant-séchant muni d'un dispositif de séparation étanche aux fluides gazeux.

Un dispositif de séparation étanche aux fluides gazeux est un dispositif qui se trouve souvent dans divers appareils industriels ou ménagers et qui assure un cloisonnement de l'enceinte de ces derniers en deux milieux distincts où séjournent des fluides gazeux sous des pressions généralement différentes.

Un tel dispositif de séparation est retrouvé par exemple dans un sèche-linge à circuit fermé d'air de séchage et à condenseur rotatif à refroidissement à air. Un condenseur rotatif à refroidissement à air est souvent constitué par une roue tournante comportant des ailettes sur ses deux faces dont l'une est en contact avec l'air de refroidissement venant de l'atmosphère ambiante et l'autre est en liaison intime avec l'air de séchage chaud et humide qui sort du tambour du sèche-linge et dont l'humidité doit être condensée et extraite.

Le dispositif de séparation dans ce sèche-linge comprend souvent une cloison fixe divisant la cuve de l'appareil en deux espaces distincts et un condenseur rotatif comportant une roue tournante à ailettes montées dans une ouverture de cette cloison. L'un de ces espaces est un espace de séchage à circuit fermé d'air de séchage où tourne un tambour contenant un linge humide à sécher, et l'autre espace est un espace de refroidissement de la roue tournante à ailettes.

La roue à ailettes du condenseur aspire au moyen des ailettes de sa face située dans l'espace de séchage, de l'air chaud et humide sortant du tambour à linge, le met en contact avec sa surface refroidie par conduction par l'air froid de l'espace de refroidissement et force l'humidité se trouvant dans cet air chaud et humide à s'y condenser avant de le réchauffer et de le retourner dans le tambour à linge pour recommencer un nouveau cycle.

Simultanément, la roue à ailettes du condenseur aspire au moyen des ailettes de sa face située dans l'espace de refroidissement, de l'air froid venant de l'extérieur pour se refroidir et retourne dans l'atmosphère, l'air de refroidissement réchauffé. La pression séjournant dans l'espace de séchage où l'air est chauffé est habituellement supérieure à la pression se trouvant dans l'espace de refroidissement. L'air chaud et humide tend à fuir l'espace de séchage et à entrer dans l'espace de refroidissement à travers la jointure de la roue à ailettes de ce condenseur et de l'ouverture de cette cloison fixe dans laquelle est montée cette roue à ailettes. Cette fuite de l'air chaud et humide provoque habituellement une grande gêne dans le milieu ambiant.

Plusieurs solutions ont été proposées pour éviter cette fuite d'air chaud et humide. Une des solutions connues consiste à créer dans cette jointure un passage en chicane, au moyen d'une rainure circulaire formée dans le bord de l'ouverture de la cloison fixe et qui coiffe librement le bord périphérique saillant de la roue à ailettes du condenseur, des trous étant percés dans cette rainure pour évacuer l'eau de condensation qui s'y forme et diriger cette eau vers une pompe de vidange, à travers l'espace de séchage. Cependant dans la pratique, ce passage en chicane gêne seulement la traversée pour air chaud et humide mais n'empêche pas une fuite de cet air de l'espace de séchage dans l'espace de refroidissement et l'eau de condensation sortant des trous de la rainure de ce passage en chicane perd dans son trajet à travers l'espace de séchage vers la pompe de vidange, une de ses parties qui se mélange de nouveau à l'air de séchage, ce qui diminue l'efficacité de l'appareil et augmente la durée du séchage.

Une autre solution connue consiste à former dans le bord de l'ouverture de la cloison fixe une surface de glissement et à fixer sur le bord saillant de la roue à ailettes un joint annulaire souple, en feutre par exemple de manière que lors d'une rotation de la roue à ailettes et sous l'effet de la force centrifuge, ce joint annulaire souple vient frotter sur cette surface de glissement et fermer, de ce fait, le passage à l'air chaud et humide qui tend à s'échapper de l'espace de séchage et à entrer dans l'espace de refroidissement. Cependant, l'étanchéité assurée par ce joint annulaire souple dépend des conditions souvent difficiles à remplir. Une de ces conditions est une bonne qualité exigée de la surface de glissement relative non seulement à l'état de surface de cette surface de glissement mais également à la régularité de forme de cette surface de glissement. Une telle condition est difficile à remplir dans une fabrication industrielle en grande série. Par ailleurs, tout défaut de cette qualité de la surface de glissement se traduit par une fuite de l'air chaud et humide dans l'espace de refroidissement.

Une autre condition est une limitation de l'échauffement de ce joint annulaire souple pour éviter toute destruction de ce dernier. En effet, une roue à ailettes du condenseur ayant un diamètre de l'ordre de 450 millimètres tourne par exemple à une vitesse de l'ordre de 800 tours par minute. Sa vitesse linéaire est supérieure à 18 mètres par seconde. Si une pression de contact du joint annulaire souple avec la surface de glissement est réglée trop grande pour maintenir une bonne étanchéité, l'échauffement de ce joint annulaire souple devient excessif voir destructif et l'usure mécanique risque d'être également trop rapide. Une limitation de cet échauffement à un niveau admissible équivaut à un maintien d'une pression de contact relativement faible de ce joint annulaire souple avec cette surface de glissement. Cette condition conduit à ce que ce joint annulaire souple n'est étanche que pour une relative faible différence de pression entre celle de l'espace de séchage et celle de l'espace de refroidissement. Dans un sèche-linge connu où la pression de contact du joint annulaire souple avec la surface de glissement a été réglée en vue de respecter cette limitation de l'échauffement, on a constaté qu'environ une moitié de l'air chaud et humide de l'espace de séchage s'échappe à travers ce joint souple dans l'espace de refroidissement.

Ainsi, cette solution connue à joint annulaire souple donne également un résultat aléatoire dans l'empêchement d'une fuite de l'air chaud et humide de l'espace de séchage dans l'espace de refroidissement.

La présente invention visant à éviter ces inconvénients permet de réaliser un dispositif de séparation comportant des éléments à mouvement relatif, assurant un cloisonnement avec une excellente étanchéité aux fluides gazeux. Elle a également pour objet un appareil muni d'un tel dispositif.

Selon l'invention, un appareil tel qu'un sèche-linge, un lavant- séchant ayant un dispositif de séparation comportant des éléments à mouvement relatif, monté dans sa cuve et destiné à diviser d'une manière étanche aux fluides gazeux l'enceinte de celle-ci en deux espaces distincts, est caractérisé en ce que le dispositif de séparation comprend au niveau de la jointure de ses éléments à mouvement relatif, un premier de ces éléments pourvu le long du bord de son ouverture, d'une gouttière ou rainure circulaire ouverte du côté du centre de cette ouverture et servant de réservoir à un liquide formant un joint liquide annulaire et un deuxième de ces éléments muni d'un bord saillant circulaire inséré dans cette gouttière ou rainure circulaire du premier élément, libre de tout contact avec des parois de cette gouttière ou rainure et immergé sur tout son long dans le liquide de ce joint liquide annulaire.

Pour mieux faire comprendre l'invention, on en décrit ci-après un exemple de réalisation illustré dans un dessin ci-annexé.

Un sèche-linge 1, selon un exemple de réalisation de l'invention illustré partiellement et schématiquement dans le dessin, comprend une cuve 2, un tambour à linge 3, à parois munies de perforations destinées au passage de l'air de séchage, monté rotatif sur des galets de maintien 4 et entraîné en rotation par un moteur électrique 5 et des dispositifs de rayonnement thermique ou des résistances électriques chauffantes 6 destinées au chauffage du linge ou de l'air de séchage et munies de dispositifs de reflexion 7 et de protection thermique 8. L'enceinte de la cuve 2 est divisée en deux espaces distincts, un espace de séchage à circuit fermé d'air de séchage 10 et un espace de refroidissement à air 11, par un dispositif de séparation étanche aux fluides gazeux et à éléments à mouvement relatif 12.

Dans l'exemple illustré, le dispositif de séparation à éléments à mouvement relatif 12 comprend comme premier des éléments à mouvement relatif une cloison fixe 14 et comme deuxième des éléments à mouvement relatif une roue tournante à ailettes 15 d'un condenseur à refroidissement à air 16. La cloison fixe 14 pourvue d'une ouverture 17 est fixée d'une manière étanche par des bords périphériques à la cuve 2. La roue tournante à ailettes 15 du condenseur 16 montée dans cette ouverture 17 de la cloison fixe 14 comprend sur ses deux faces respectivement des ailettes radiales 20 et 21 et un bord périphérique circulaire saillante 23. La roue à ailettes 15 est entraînée en rotation par un moteur électrique 25. L'espace de refroidissement 11 est en communication avec l'extérieur par des ouvertures 26, 27.

Selon l'invention, le dispositif de séparation étanche aux fluides gazeux 12 comprend dans la jointure de ses éléments à mouvement relatif, un joint liquide 28.

Dans l'exemple illustré, le dispositif de séparation 12 comprend dans la jointure du bord de l'ouverture 17 de la cloison fixe 14 et du bord périphérique circulaire de la roue à aillettte 15 du condenseur 16, un joint liquide 28.

Selon une autre caractéristique, le dispositif de séparation 12 comprend au niveau de la jointure de ses éléments à mouvement relatif, un premier de ces éléments pourvu le long du bord de son ouverture, d'une gouttière ou rainure circulaire ouverte vers le côté du centre de cette ouverture et servant de réservoir à un liquide formant un joint liquide annulaire, et un deuxième de ces éléments muni d'un bord saillant circulaire inséré dans cette gouttière ou rainure circulaire de ce premier élément, libre de tout contact avec des parois de cette gouttière ou rainure et immergé sur tout son long dans le liquide de ce joint liquide annulaire.

Dans l'exemple de réalisation illustré, le dispositif de séparation 12 comprend comme premier élément à mouvement relatif une cloison fixe 14 pourvue le long du bord de son ouverture 17, d'une gouttière ou rainure circulaire ou torique 30 ouverte vers le côté du centre de cette ouverture 17 et garnie d'un liquide 31 constituant un joint liquide annulaire 28 et comme deuxième élément à mouvement relatif une roue tournante à ailettes 15 d'un condenseur à refroidissement à air 16 munie d'un bord périphérique circulaire saillant 23 inséré dans cette gouttière ou rainure torique 30, libre de tout contact avec ces parois de cette gouttière ou rainure torique 30 et immergé sur tout son long dans le liquide 31 de ce joint liquide 28.

Dans l'exemple illustré, le dispositif de séparation 12 est monté à l'horizontale. La cloison fixe 14 et la roue à ailettes 15 du condenseur de ce dispositif de séparation 12 sont dans leur position horizontale.

Lorsque la roue à ailettes radiales 15 du condenseur 16 est à l'arrêt, l'espace de séchage 10 est hermétiquement séparé de l'espace de refroidissement 11 par ce dispositif de séparation 12 et par ce joint liquide 28 qui dans sa forme liquide et par gravité occupe la partie la plus basse de la gouttière ou rainure torique 30 du bord de l'ouverture 17 de la cloison fixe 14 et prend une forme annulaire, le bord circulaire saillant 23 de la roue à ailettes 15 du condenseur 16 étant immergé dans le liquide 31 de ce joint liquide annulaire 28. Toute fuite de l'air chaud 4 et humide de l'espace de séchage 10 est ainsi empêchée par ce dispositif de séparation 12 et ce joint liquide 28.

Lorsque la roue à ailettes 15 du condenseur 16 tourne autour de son axe 18, cette roue entraîne le liquide 31 du joint liquide 28 et lui communique un mouvement giratoire le long de cette gouttière ou rainure torique 30. Sous l'effet de la force centrifuge, le liquide 31 est forcé de se déplacer latéralement à l'encontre de la pression exercée par l'air chaud et humide de l'espace de séchage 10 et se plaquer contre la paroi de cette gouttière ou rainure torique 30 de manière à former de nouveau, un joint liquide annulaire 28a où le bord circulaire saillant 23 de la roue à ailettes 15 continue à être immergé, ce qui empêche toute fuite de l'air chaud et humide de l'espace de séchage 10 dans l'espace de refroidissement 11. L'efficacité du joint liquide 28 ou 28a peut se mesurer par la différence de pressions qu'il est susceptible de maintenir entre les deux espaces de séchage 10 et de refroidissement 11 qu'il sépare. Cette différence de pression est proportionnelle à la masse volumique du fluide dans le joint, à l'accélération de ce fluide au niveau de l'interface du bord circulaire 23 de la roue à ailettes et du fluide du joint, et à l'écart radial entre les interfaces aux deux faces du bord circulaire 23 de la roue à ailettes 15. Le fluide du joint 28 ou 28a est l'eau. L'eau a une masse volumique supérieure à celle de l'air par exemple. Ainsi, un joint 28 ou 28a utilisant de l'eau a une efficacité supérieure à un joint connu à chicane à air par exemple.

Ainsi grâce au joint liquide annulaire 28 ou 28a, le dispositif de séparation 12 est étanche aux fluides gazeux.

Selon l'invention, le liquide 31 du joint liquide 28, 28a est avantageusement constituée par du liquide de condensation formé sur la roue à ailettes du condenseur. Dans le sèche-linge 1 illustré, le liquide du joint liquide 28, 28a est constitué par de l'eau provenant de l'humidité de l'air de séchage chaud et humide sortant du tambour à linge 3 qui se condense au contact de la roue refroidie à ailettes 15 du condenseur 16. Cette eau de condensation est sous l'effet de la force centrifuge refoulée au fur et à mesure de sa formation vers la périphérie de la roue à ailettes 15 puis dans la gouttière ou rainure torique 30 pour alimenter automatiquement en liquide le joint liquide annulaire 28, 28a.

Dans l'exemple de réalisation illustré, un siphon 50 qui relie la gouttière ou rainure torique 30 à un bac de récupération de liquide 51 est monté dans la cuve 2 du sèche-linge 1 afin d'évacuer tout excès éventuel de liquide dans la gouttière ou rainure torique 30.

Lors d'une rotation de la roue à ailettes 15, le frottement entre le joint liquide annulaire 28, 28a et le bord périphérique saillante 23 de la roue à ailettes 15 ne provoque ni une abrasion mécanique notable ni un dégagement important de chaleur. Il y a alors une grande latitude dans le choix de matériaux constituant cette cloison fixe 14, et cette roue à ailettes 15. Par ailleurs, la gouttière ou rainure torique 30 et le bord annulaire saillant 23 de la roue à ailettes 15 qui ont des formes relativement simples et qui n'exigent dans leur assemblage aucune grande précision, sont faciles et économiques à réaliser.

Le joint liquide 28, 28a est insensible au vieillissement car ce joint liquide est constamment renouvelé ou alimenté en liquide par de l'eau de condensation formée sur la roue à ailettes du condenseur 16.

Dans une variante de réalisation, une alimentation en liquide 31 de la gouttière ou rainure circulaire 30 pour former le joint liquide annulaire 28, 28a est effectuée ou complétée par une pompe à liquide non représentée qui puise de l'eau dans le bac de récupération 51 ou à une source indépendante non représentée.

Dans une autre variante de réalisation non représentée, le dispositif de séparation 12 est monté à la verticale. La cloison fixe 14 et la roue à ailettes 15 sont dans leur position verticale.

Quand la roue à ailettes 15 du condenseur 16 est à l'arrêt, le séchage n'est pas en général en activité et il n'y a aucune circulation d'air chaud et humide dans l'espace de séchage 10. Une étanchéité de dispositif de séparation 12 entre l'espace de séchage 10 et l'espace de refroidissement 11 n'est pas alors nécessaire.

Quand la roue à ailette 15 du condenseur 16 tourne, le séchage est en marche, la gouttière ou rainure circulaire 30 est alors alimenté en liquide par de l'eau de condensation. La roue tournante à ailettes 15 du condenseur 16 communique un mouvement giratoire à l'eau dans cette gouttière ou rainure annulaire 30. Au début, la quantité d'eau dans cette gouttière ou rainure 30 est faible et cette eau de condensation forme alors un anneau incomplet de liquide. Ce joint liquide incomplet ne peut pas empêcher une fuite de l'air de l'espace de séchage n'est pas gênante car cet air est encore peu chargé en humidité. Puis rapidement il se forme dans la gouttière ou rainure annulaire 30 un anneau entier de liquide qui forme un joint liquide complet 28a réalisant une bonne étanchéité du dispositif de séparation 12 et empêchant toute fuite de l'air de séchage chaud et humide de l'espace de séchage d'entrer dans l'espace de refroidissement. L'alimentation en liquide de la gouttière ou rainure circulaire 30 peut être complétée ou accélérée par une pompe à liquide non représentée qui puise de l'eau dans le bac de récupération 51 ou à une source indépendante non représentée.

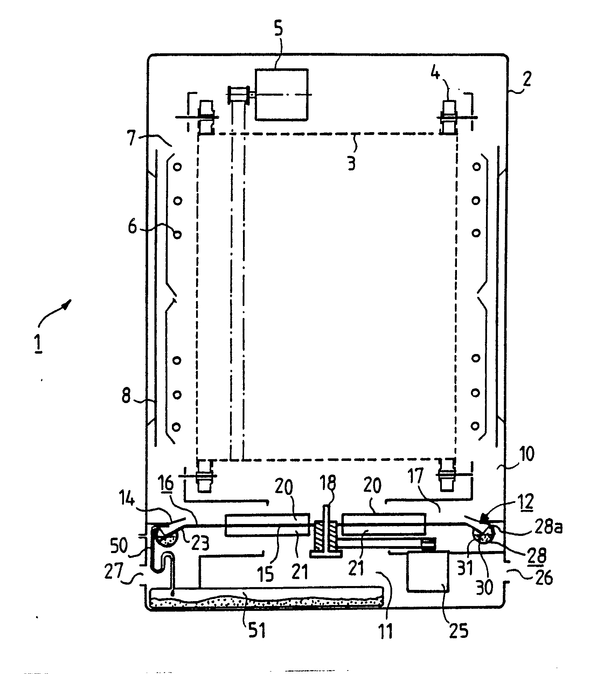

Le dispositif de séparation 12 est ainsi étanche et efficace aussi bien dans sa position de montage à l'horizontale selon les exemples des figures 1 et 2 que dans sa position de montage à la verticale.


**Revendications**

1. Appareil tel qu'un séche-linge, un lavant-séchant ayant un dispositif de séparation (12) comportant des éléments à mouvement relatif (14, 15), monté dans sa cuve (2) et destiné à diviser d'une manière étanche aux fluides gazeux l'enceinte de celle-ci en deux espaces distincts (10, 11), caractérisé en ce que le dispositif de séparation (12) comprend au niveau de la jointure de ses éléments à mouvement relatif (14,15) un premier (14) de ces éléments pourvu le long du bord de son ouverture (17), d'une gouttière ou rainure circulaire (30), ouverte du côté du centre de cette ouverture et servant de réservoir à un liquide (31) formant un joint liquide annulaire (28, 28a) et un deuxième (15, 44) de ces éléments muni d'un bord saillant circulaire (23) inséré dans cette gouttière ou rainure circulaire du premier élément (30) libre de tout contact avec des parois de cette gouttière ou rainure et immergé sur tout son long dans le liquide (31) de ce joint liquide annulaire (28, 28a).

2. Appareil selon la revendications 1, caractérisé en ce que le dispositif de séparation (12) comprend comme premier élément à mouvement relatif une cloison fixe (14) fixée d'une manière étanche par des bords périphériques à la cuve (2), et comme deuxième élément à mouvement relatif une roue tournante à ailettes (15) d'un condenseur à refroidissement à air (16), munie d'un bord périphérique circulaire saillant (23).

3. Appareil selon l'une des revendications 1 et 2, caractérisé en ce que le dispositif de séparation (12) comprend comme liquide (31) formant un joint liquide (28, 28a), de l'eau de condensation formée sur la roue à ailettes (15) du condenseur (16).

4. Appareil selon l'une des revendications 1 à 3, caractérisé en ce qu'il comprend un bac de récupération de liquide (51) et un siphon (50) d'évacuation d'un excès de liquide dans la gouttière (30) monté entre cette gouttière ou rainure torique (30), et ce bac de récupération de liquide (51).

5. Appareil selon l'une des revendications 1 à 4, caractérisé en ce qu'il comprend une pompe à liquide alimentant la gouttière ou rainure torique (30) en liquide (31) qui constitue un joint liquide (28, 28a).

6. Appareil selon l'une des revendications 1 à 5, caractérisé en ce qu'il comprend un dispositif de séparation (12) monté dans sa cuve (2) suivant une position horizontale.

7. Appareil selon l'une des revendications 1 à 5, caractérisé en ce qu'il comprend un dispositif de séparation (12) monté suivant une position verticale.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-1385429 (ROBATEL & MULATIER)<br>* abrégé; figures * | 1 | F16J15/40<br>D06F58/24 |
| A | | 6 | |
| | --- | | |
| Y | WORLD PATENTS ABSTACTS; semaine 8704<br>section CH, classe F, page 19, n⌀87-026575/04<br>Derwent Publications Ltd, Londres-GB;<br>& JP-A-61 284300 (SANYO); 15-12-1986 | 1 | |
| A | | 2 | |
| | --- | | |
| A | GB-A-2071233 (HAGEDORN ET AL)<br>* page 2, lignes 5 - 12 *<br>* abrégé; figure 2 * | 1, 5-6 | |
| | --- | | |
| A | US-A-3915596 (FRAZAR)<br>* abrégé; figure 2 * | 2 | |
| | --- | | |
| A | FR-A-2591704 (LEGOY)<br>* revendication 1; figures * | 7 | |
| | ----- | | |

**DOMAINES TECHNIQUES RECHERCHES (Int. Cl.5)**

F16J
D06F

Le présent rapport a été établi pour toutes les revendications

| Lieu de la recherche | Date d'achèvement de la recherche | Examinateur |
|---|---|---|
| LA HAYE | 24 JUILLET 1990 | NARMINIO A. |